# EUROPEAN PATENT APPLICATION

(11) **EP 3 093 767 A1**
(43) Date of publication of application: **16.11.2016**
(21) Application number: 15397522.2
(22) Date of filing: 12.05.2015
(51) Int. Cl.: G06F 11/22

(54) **METHOD, APPARATUS AND COMPUTER PROGRAM PRODUCT FOR TESTING A DEVICE**

(71) Applicant: Optofidelity OY, 33720 Tampere (FI)
(72) Inventor: Paloniemi, Jere, 33720 Tampere (FI); Kuokkanen, Antti, 33720 Tampere (FI); Jokinen, Kimmo, 33720 Tampere (FI)
(74) Representative: Tampereen Patenttitoimisto Oy

(57) **Abstract**

The invention relates to a method for testing a device (20) and a testing apparatus (2) and a computer program product for implementing the method. The method comprises simulating a touch on a touch panel (21); obtaining information of a response of the touch panel (21) to the simulated touch; and using the response information to determine one or more properties of the device (20). The simulating comprises providing an optical signal towards a surface of the touch panel (21); and converting the optical signal to another physical phenomenon on the surface of the touch panel (21) by a converting element (3).

## Description

### Field of the Invention

The present invention relates to a method for testing a device, the method comprising simulating a touch on a touch panel, and obtaining information of a response of the touch panel to the simulated touch. The invention also relates to an apparatus for testing a device, the apparatus comprising means for simulating a touch on a touch panel, and means for obtaining information of a response of the device to the simulated touch. The invention further relates to computer program product for testing a device including one or more sequences of one or more instructions which, when executed by one or more processors, cause an apparatus or a system to at least simulate a touch on the touch panel, and obtain information of a response of the device to the simulated touch.

### Background of the Invention

A touch panel, which may also be called as a touch sensor, is a device which may detect a touch and provide corresponding information of the touch to other parts of a device, which comprises the touch panel. The touch panel may replace buttons, switches and/or a pointing device (a so called computer mouse). The touch panel is typically intended to detect a touch of a stylus, which may be a finger and/or a pencil-like object particularly dedicated to be used with touch panels. There are many kinds of touch panel technologies of which the most popular are resistive touch panels and capacitive touch panels.

Different aspects affect to the operation of the touch panels. For example, technical implementation and/or controlling software may affect to the number of simultaneous touches which will be detected and how sensitive the touch panel is to touches, i.e. how near the surface of the touch panel the stylus has to be and/or how large area need to be touched before the touch panel detects the touch, etc.

Apparatuses and methods have been developed for automatically testing devices having a touch panel. Such apparatuses may use a robotic arm to move a stylus to a location where the touch need to be simulated, and to cause the stylus to touch the surface of the touch panel. The apparatus also are able to obtain information of the reaction of the device under test caused by the touch. This information may be obtained, for example, by a camera which captures images shown by a display, which is located under the touch panel. However, it may happen that the stylus or the robotic arm block the view of the camera in such a way that the camera does not see all the information shown by the display which is caused by the simulated touch. Hence, the analyses of the captured information may not properly reveal the real reaction of the device under test to the simulated touch. Furthermore, the movements of the robotic arm(s) may need time consuming programming work. As a further drawback of the use of mechanically movable stylus is that the movements may be slow and inaccurate.

Therefore, there is a need to find an improved method and apparatus in which reactions of the device under test to simulated touch(es) may be more reliably detected by the apparatus. The method should also enable the use of a simple test setup.

### Summary of the Invention

One aim of the present invention is to provide an improved method and apparatus for testing a touch panel. Testing of a touch panel means in this context e.g. testing the performance of the touch panel regarding one or more touches, testing reactions of the touch panel to unwanted phenomena which may affect to the operation of the touch panel, testing the performance of a device under test in which the touch panel is used as an input of a user interface, etc.

To put it more precisely, the method of the present invention is primarily characterised by:
providing an optical signal towards a surface of the touch panel; and
converting the optical signal to another physical phenomenon on the surface of the touch panel by a converting element.

The apparatus of the present invention is primarily characterised in that the apparatus further comprises:
means for providing an optical signal towards a surface of the touch panel; and
means for converting the optical signal to another physical phenomenon on the surface of the touch panel.

The computer program product of the present invention is primarily characterised in that the computer program product includes one or more sequences of one or more instructions which, when executed by one or more processors, cause an apparatus or a system to at least perform said simulating by at least:
providing an optical signal towards a surface of the touch panel; and
converting the optical signal to another physical phenomenon on the surface of the touch panel by a converting element.

Some advantageous embodiments are defined in the dependent claims.

Some advantages may be achieved by the present invention. The use of optical signals in simulating the touch makes the use of robotic arms and stylus unnecessary in many testing arrangements. Therefore, when the respons(es) of the device under test are examined by using a camera to capture information shown by a display located underneath the touch panel, there may not be any view blocking obstacles and the whole image produced by the display can be seen by the camera. The use of optical signal also enables a much wider testing of the touch panel compared to prior art methods. For example, in addition to and instead of touches on the touch panel, the optical signal may be used to simulate other physical phenomena. For example, the optical signal may be used to simulate substances which may cause disturbances to the touch panel. Such substances may be dirt such as grease on the surface of the touch panel, which may affect to the operation of the touch panel. Furthermore, the optical signal may be altered much more faster than it is possible to move a mechanical stylus wherein it may be possible to simulate much faster user input than with prior art methods. The ability to use optical signals also gives much more freedom of choice for test patterns to be generated on the touch panel, wherein more complicated tests may be performed compared to prior art methods. It may also be possible to test quite large touch panels by using the testing apparatus, in accordance with an embodiment. The size of the touch panel may only be limited by practical reasons, so the diameter of the touch panel may be several tenths of centimetres, several hundreds of centimetres, or even several metres.

### Description of the Drawings

In the following the present invention will be described in more detail with reference to the appended drawings, in which
- Figure 1: is a conceptual drawing of a measurement setup according to an example embodiment;
- Figure 2: is a simplified block diagram of an apparatus according to an example embodiment;
- Figure 3: illustrates a first test arrangement, in accordance with an embodiment;
- Figure 4: illustrates a second test arrangement, in accordance with an embodiment;
- Figure 5: illustrates a third test arrangement, in accordance with an embodiment;
- Figure 6: illustrates a fourth test arrangement, in accordance with an embodiment;
- Figures 7a-7d: illustrate different examples of light patterns for simulating different kinds of touches, in accordance with an embodiment.

### Detailed Description of the Invention

Some terms used in this application will now be shortly explained for clarity. The term optical signal means, among other things, light irradiation i.e. a stream of photons which may form a variable or a constant light pattern on a surface. The optical signal may comprise one or more wavelengths which are visible by human eye and/or one or more wavelengths which are invisible by human eye. A touch panel is a device in which at least one electric property is changed in response to a touch on a surface of the touch panel. For example, a capacitance of a capacitive touch panel changes at the location of the touch, whereas a resistance of a resistive touch panel changes at the location of the touch. The change and the location of the electric property may be detected by a control circuitry of the touch panel. The control circuitry may be part of the touch panel or it may be external to the touch panel. The touch panel may be opaque, transparent or partly opaque and partly transparent. A touch need not always mean a physical contact between the touch panel and the object which is touching the touch panel. For example, a touch panel may sense a so called hovering over the surface of the touch panel, which means that the object is brought into proximity of the surface of the touch panel without actually touching it.

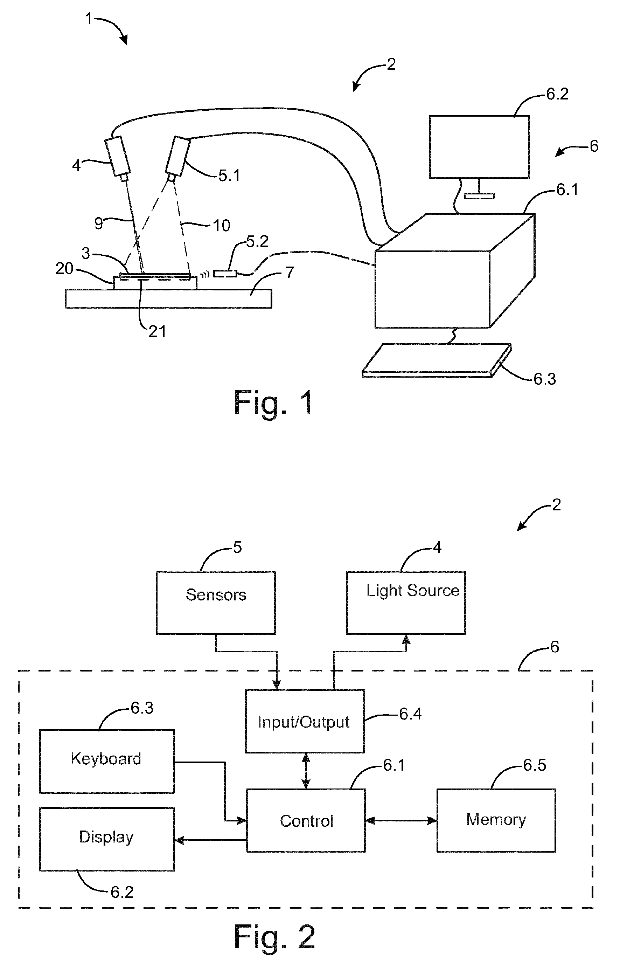

In the following some example embodiments will be described. Figure 1 illustrates an example of a measurement setup 1 according to an example embodiment and figure 2 is a simplified block diagram of an apparatus 2 according to an example embodiment. The setup 1 comprises a device 20 to be tested (device under test, DUT) and the testing apparatus 2. The testing apparatus 2 comprises a converting element 3 which is adapted to convert optical signal such as a light pattern directed on the surface of the converting element 3 into another physical quantity. For example, the optical signal may cause a change in capacitance and/or permeability of the converting element 3 at the locations where the optical signal is affected. The quantity of the change of the capacitance may depend on, for example, the luminous intensity and/or the wavelength of the light on the surface of the converting element 3. This will be explained later in this specification. The apparatus 2 further comprises one or more light sources 4 by which controlled light patterns may be generated and directed on the surface of the converting element 3. The apparatus 2 also comprises one or more sensors 5 for obtaining information on effects which the converting element 3 may have induced to the touch panel 21 as a consequence of the light signal. Information from the one or more sensors 5 may be output to a control element 6 for further analyses.

In the simplified setup of Figures 1 and 2 the control element 6 may comprise a central processing unit 6.1, a display 6.2, a keyboard 6.3, an input/output circuitry 6.4 for interfacing with the light source 4 and/or the sensors 5, and a memory 6.5, but may also comprise other elements, or may comprise elements different from or less than the element depicted in Figures 1 and 2. A purpose of the control element 6 is to receive and analyse test results and possibly perform other functions on the basis of test results.

In accordance with an embodiment, the converting element 3 is a thin film membrane, which is responsive to light, i.e. a light sensitive thin film membrane. This kind of membrane may also be called as a photo-reactive membrane or a photo-responsive membrane. The material of the membrane may comprise a suitable polymer which has been modified so that it changes one or more of its properties at the location which is affected by light. The affected property or properties may be permeability, capacitance, conductivity and/or some other property which may induce a detection of touch in the touch panel. The illumination induced effect should also be recoverable i.e. when the illumination is removed the properties of the converting element 3 should become substantially the same than before the effect of illumination.

The size of the converting element 3 may depend on the size of touch panels 21 which are meant to be tested with the testing apparatus 2. The converting element 3 may also be flexible so that it adapts to the form of the surface of the touch panel 21 when the converting element 3 is put on the touch panel. Hence, also touch panels 21 in which the cross section of the surface is not flat but is more or less curved may be tested with the testing apparatus 2.

The converting element 3 is preferably a so called passive element, which means that, in addition to the illumination, it does not need external energy source to operate.

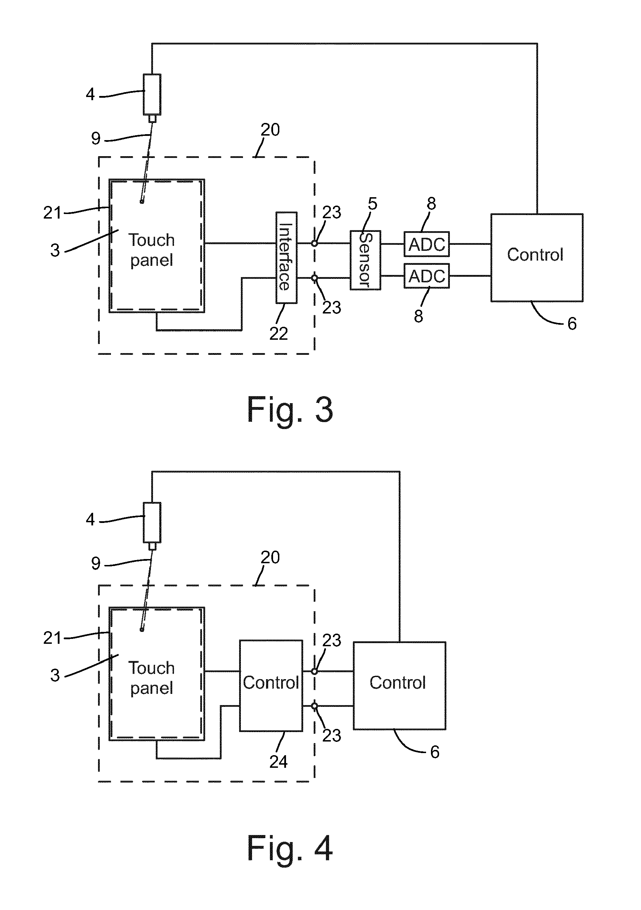

In the following the operation of the testing apparatus 2 will be explained in more detail using several, non-limiting examples with reference to Figures 3 to 5. In all these examples the converting element 3 has been put on the touch panel 21 so that the converting element 3 covers at least those portions of the touch panel 21 which need to be tested. Preferably, the converting element 3 covers the whole active area of the touch panel 21. According to a first example, the device 20 under test is a touch panel, which comprises an interface 22 for outputting an output signal on the basis of a detected touch. This is illustrated in Figure 3. The output signal may be one or more electric signals indicative of the location of the touch. For example, two-dimensional (2D) detection may require that the touch panel outputs two separate electric signals, one of which is indicative of the touch in one direction (e.g. X-coordinate) and the other one is indicative of the touch in another direction (e.g. Y-coordinate). The touch panel 21 may also need to be supplied with one or more voltages to enable the operation. The outputted electric signals may be voltages, wherein the voltage level indicates the location of the touch.

The touch panel 21 is put on a test bench 7 (Figure 1) or on another appropriate base, and the one or more sensors 5 of the testing apparatus are connected to output terminal(s) 23 of the touch panel. In this example, the output terminals 23 provide the electric signals to the sensors 5. Hence, the testing apparatus 2 converts the electric signals to digital information by one or more analog-to-digital converters 8 (ADC). The control element 6 may have been provided with a test program which includes instructions on the optical signals to be generated by the light source 4. The instructions may include information on the illumination pattern(s) and timing information for the illumination pattern(s). As an example, the illumination pattern may comprise a light spot at a location where a touch should be simulated. The light spot may be moved from one location to another location using a certain path to simulate a stylus moving the path on the surface of the touch panel 21. It may also be possible to simulate two or more substantially simultaneous touches by forming two or more light spots by the light source 4.

It should be noted here that the sensors 5 may not always be separate elements but, in accordance with an embodiment, the output terminals 23 may be connected via a wire to e.g. the analog-to-digital converters 8, which are then able to convert the electric signals from the device 20 into digital information for further processing, for example, by the control element 6.

The control element 6 of the testing apparatus 2 may continuously receive digital information from the analog-to-digital converters 8 during the test. The digital information is analysed by the control element 6 to determine how the touch panel 21 responses to the simulated touch(es) i.e. to the changes in the properties of the converting element 3 induced by the optical signal 9 targeted on the surface of the converting element 3. The analyses results may then be used to evaluate the quality of the touch panel 21.

According to a second example, the device 20 under test is a touch panel 21, which comprises a control circuitry 24 for forming a digital output signal on the basis of a detected touch. In other words, the device 20 comprises circuitry for converting the electric signal formed by the touch panel 21 into digital information, wherein the testing apparatus 2 may not need such circuitry and may receive the digital information directly from the device 20. This is illustrated in Figure 4. The testing operation may otherwise proceed in the same way than in the first example.

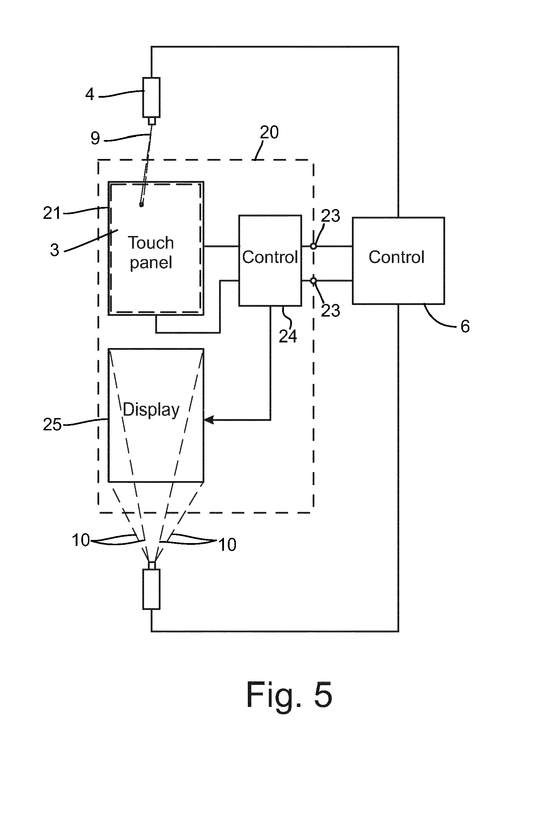

According to a third example, illustrated in Figure 5, the device 20 under test is a device comprising the touch panel 21. The device 20 also comprises control circuitry 24 for operating the touch panel 21 and initiating operations as a response to touches on the touch panel 21. The device 20 may also comprise one or more interfaces 23 for coupling the device 20 with other apparatuses and/or the testing apparatus 2. The interface 23 may, for example, output information on the operations which the device has conducted on the basis of a detected touch. As an example, the touch panel 21 may be logically divided into several areas each corresponding to a certain operation (e.g. operation 1, operation 2, ..., operation N). Hence, when the touch panel detects a touch at any of these locations, the device 20 may initiate a corresponding operation and may provide an indication of the operation at the interface 23. Therefore, the testing apparatus 2 may examine the operation indicated at the interface 23 and compare it with the real location of the simulated touch. If the location of the simulated touch corresponds with the operation defined for that location, the control element 6 of the testing apparatus 2 may deduce that the response of the touch panel 21 to the simulated touch is correct.

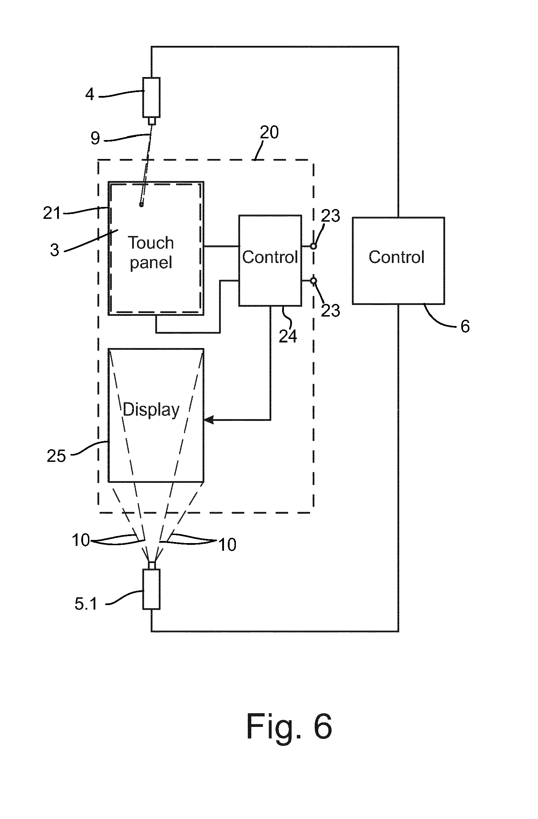

In accordance with an embodiment, at least one of the sensors 5 is an image capturing device 5.1, such as a digital camera or a video camera. The image capturing device 5.1 may be used to capture images or video for example in situations in which the device under test comprises a display 25. This is illustrated in Figure 6 as a fourth example. In accordance with an embodiment, the testing apparatus 2 need not be coupled to the interface 23 of the device 20 but information on the responses of the device 20 may be obtained by the image capturing device 5.1. Dotted lines 10 in Figure 6 illustrate the view the image capturing device 5.1 may capture, but the view may also be larger than the display area. In accordance with an embodiment, the view may also be smaller than the display area especially when the responses the device 20 forms on the display are located in a smaller area of the display.

It should be noted that although Figures 5 and 6 depict the display 25 and the touch panel 21 being separate from each other, in practical touch screen implementations the touch panel is located above the display so that the information shown by the display 25 can be seen through the touch panel 21.

The operations which may be initiated by the simulated touch or touches may vary in different devices. Hence, a more detailed description is not needed here. When the device 20 under test is to be tested, the operator of the testing apparatus 2 may enter information about the device 20 so that the testing apparatus 2 is aware of how the device 20 should response to touches on the touch panel 21. The testing apparatus 2 may hence use the information regarding the device 20 to compare it with actual responses of the device under test and on the basis of the comparison deduce whether the touch panel 21 of the device 20 and/or the device 20 operates correctly.

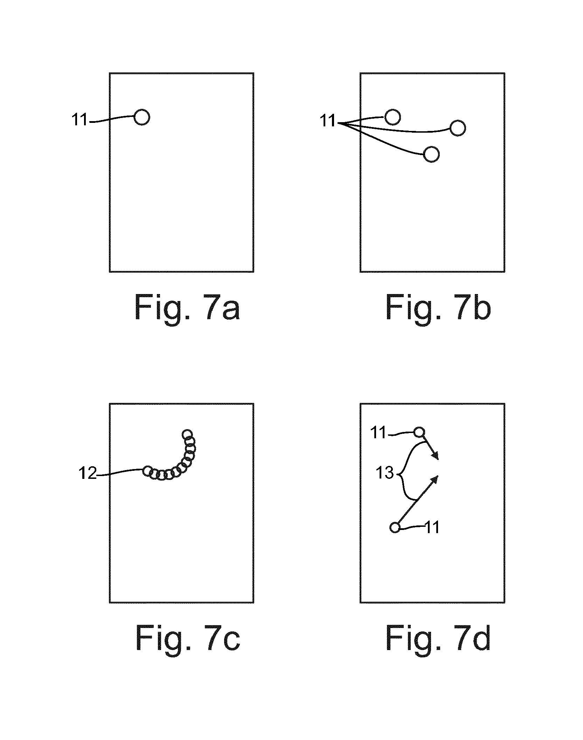

The light source 4 and the converting element 3 of the testing apparatus 2 may be utilized to provide many different kinds of simulations of touches. For example, the light source 4 may produce light spots 11 at determined locations to simulate individual touches. This is illustrated in Figure 7a. A multi-touch may be simulated by producing a multiple of light spots 11 on the converting element 3. This is illustrated in Figure 7b. Simulation of a moving stylus may be implemented by producing a sequence 12 of a light spot which moves along a desired path on the surface on the converting element. This is illustrated in Figure 7c. Correspondingly, movement of two or more touching points may be simulated by producing a multiple of light spots which travel along desired paths on the surface of the converting element 3. This is illustrated in Figure 7d, in which the arrows 13 illustrate the movement so the whole gesture of Figure 7c need not be simultaneously visible but it depicts the path the light spots 11 have travelled.

The light source 4 is, for example, a video projector or another kind of light emitting apparatus which is able to produce controlled light patterns towards the converting element 3. The light source 4 may comprise optics which may be used to focus the light pattern on a desired distance from the light source 4, i.e. so that the light pattern is focused on the surface of the converting element 4.

The desired light patterns may be designed by a software program in which suitable patterns can be drawn. It may also be desired to define movements of the patterns and timing information for the generation and/or movements of the patterns so that longer sequences of touches may be simulated by the testing apparatus 2.

The testing apparatus 2 can also be used to simulate different kinds of fault conditions and some other situations which may affect to the operation of the touch panel. For example, the light source 4 may be used to simulate substances like dirt on the touch panel, which may cause disturbances to the touch panel 21. Grease is an example of such substance but also some other substances may affect the operation of the touch panel 21. This may be achieved by producing a certain kind of illuminated area which makes the converting element 3 produce a physical phenomenon which simulates dirt on the touch panel 21. Then, the light source 4 may further produce controlled light patterns which simulate touches to find out how does the simulated abnormalities affect to the operation of the touch panel 21.

Different kinds of converting elements 3 may be needed for different kinds of tests. For example, when the device 20 under test comprises a display 25 under the touch panel 21, the light emitted via or by the display 25 should not affect to the simulation of touches. In other words, the converting element 3 should be immune to those wavelengths of light which the display emits. In such cases the converting element 3 might be responsive to ultra violet light, for example.

In some other situations it may be desirable to generate light patterns which are visible to human eye so that the operator of the testing apparatus 2 is able to see the light patterns on the surface of the converting element 3.

Furthermore, it may be desirable to generate light patterns which are visible to the image capturing apparatus so that the images captured during the test show, not only the response of the device 20 to the simulated touches, but also the light patterns generated by the light source 4. Hence, it may be possible to analyse the images at a later stage and see the light patterns and corresponding responses. It should be noted that the image capturing device may be able to convert light which is invisible to human eye to images visible to human eye. For example, the light source 4 may produce infrared light patterns which the image capturing device captures and produces images in which the infrared light has been converted to other wavelengths which are visible to human eye.

In some situations the converting element 3 may operate so that different wavelengths of light produce different kinds of responses of the converting element 3. For example, illumination on a first wavelength may affect more to the capacitance than the permeability of the illuminated area of the converting element 3 whereas illumination on a second wavelength may affect more to the permeability than the capacitance of the illuminated area of the converting element 3.

In some situations the converting element 3 may comprise more than one membrane arranged as a stack of membranes so that each membrane may have different properties. Alternatively, to provide similar kind of operation the converting element 3 may comprise one membrane in which a multiple of different properties have been implemented.

The image capturing device 5.1 may also be utilized when testing devices 20 which do not comprise a display. The captured image may show the light patterns which were illuminated to the converting element 3 and the responses of the device 20 under test may have been captured by other sensors of the testing apparatus 2 and stored for later analyses.

The testing apparatus 2 may be utilised to simulate many different kinds of situations and test properties of the touch panel. In addition to tests described above it may also be possible to test sensitivity of the touch panel 21, to find out possibly less sensitive areas of the touch panel 21, etc. The sensitivity may be tested e.g. in such a way that a light pattern is generated and the illumination level of the light pattern is adjusted to find out, for example, at which illumination level the touch panel 21 responses to the light pattern. Also the speed of movement of the light pattern may be adjusted to find out, how fast the touch panel reacts to touches. Still further, the size of the light spot may be adjusted to find out, how small area is sufficient to detect a touch.

In an embodiment the device 20 under test may response to a touch by producing audible sound, such as a beep or speech. Hence, the sensors 5 of the testing apparatus 2 may comprise a microphone 5.2 (Figure 1) or another element which is able to convert audio to electric signal so that the controlling element 6 may detect the response of the device 20 under test. In addition to or instead of the audio/electric converter, the sensors may comprise an element which may produce an electric signal from vibrations (a haptic sensor such as an accelerometer). Hence, the testing apparatus 2 may also be able to obtain information on mechanical responses of the device 20 under test. As an example, the device 20 under test may be a mobile phone and the purpose is to test a silent mode of the mobile phone. Hence, the haptic sensor may detect whether the mobile phone is vibrating or not as a response to an optical simulation signal.

As was explained above, the testing apparatus 2 may comprise the image capturing device 5.1 although it may not be needed in each test. Therefore, the invention is not limited to testing apparatuses 2 having the image capturing device 5.1 but may also be implemented without the image capturing device 5.1.

The properties of the converting element 3 may need to be known by the control element 6 so that it is able to eliminate possible irregularities of the converting element 3 from the test results.

The present invention is not limited to the above described embodiments but can be modified within the scope of the appended claims.

## Claims

1. A method for testing a device (20), the method comprising:
simulating a touch on a touch panel (21); and
obtaining information of a response of the touch panel (21) to the simulated touch; and
using the response information to determine one or more properties of the device (20);
**characterised in that** said simulating comprises:
providing an optical signal towards a surface of the touch panel (21); and
converting the optical signal to another physical phenomenon on the surface of the touch panel (21) by a converting element (3).

2. The method according to claim 1, **characterised in that** the converting element (3) located on the touch panel (21) changes at least one of the following properties at a location illuminated by the optical signal:
capacitance;
permeability;
conductivity.

3. The method according to claim 1 or 2, **characterised by** obtaining the information of a response of the touch panel (21) to the simulated touch by a sensor (5).

4. The method according to claim 3, **characterised in that** the sensor is at least one of the following:
an image capturing device (5.1);
an audio/electric converter;
an accelerometer.

5. The method according to any of the claims 1 to 4, **characterised in that** the device (20) comprises a display (25) under the touch panel (21), wherein at least part of the information of the response is obtained by capturing information displayed by the display (25) as a response to the simulated touch.

6. The method according to any of the claims 1 to 5, **characterised in that** the optical signal has a wavelength different from wavelengths of optical signals radiated by the device (20).

7. The method according to any of the claims 1 to 6, **characterised by** directing to the converting element (3) an illumination pattern which simulates substances on the surface of the touch panel (21) causing disturbances to the touch panel (21).

8. An apparatus (2) for testing a device (20) comprising:
means (3, 4) for simulating a touch on a touch panel (21);
means (5) for obtaining information of a response of the touch panel (21) to the simulated touch; and
means (6) for using the response information to determine one or more properties of the device (20);
**characterised in that** said means (3, 4) for simulating comprises:
means (4) for providing an optical signal towards a surface of the touch panel (21); and
means (3) for converting the optical signal to another physical phenomenon on the surface of the touch panel (21).

9. The apparatus according to claim 8, **characterised in that** the means (3) for converting comprise a converting element (3) adapted to be positioned on the touch panel (21), wherein the converting element (3) is adapted to change at least one of the following properties at a location illuminated by the optical signal:
capacitance;
permeability;
conductivity.

10. The apparatus according to claim 8 or 9, **characterised in that** the apparatus comprises an image capturing device (5.1) for obtaining the information of a response of the touch panel (21) to the simulated touch.

11. The apparatus according to any of the claims 8 to 10, **characterised in that** the means (4) for providing an optical signal is a sensor (5).

12. The apparatus according to claim 8 or 9, **characterised in that** the sensor is at least one of the following:
an image projector);
an audio/electric converter;
an accelerometer.

13. The apparatus according to any of the claims 8 to 12, **characterised in that** the device (20) comprises a display (25) under the touch panel (21), wherein the means (5) for obtaining information comprise means (5.1) for capturing information displayed by the display (25) as a response to the simulated touch.

14. The apparatus according to claim 13, **characterised in that** the optical signal has a wavelength different from wavelengths of optical signals illuminated by the display (25).

15. A computer program product for testing a display (1) including one or more sequences of one or more instructions which, when executed by one or more processors, cause an apparatus or a system to at least perform the following:
simulate a touch on a touch panel (21); and
obtain information of a response of the touch panel (21) to the simulated touch; and
use the response information to determine one or more properties of the device (20);
**characterised in that** the computer program product includes one or more sequences of one or more instructions which, when executed by one or more processors, cause an apparatus or a system to at least perform said simulating by at least:
providing an optical signal towards a surface of the touch panel (21); and
converting the optical signal to another physical phenomenon on the surface of the touch panel (21) by a converting element (3).
